# EUROPÄISCHE PATENTSCHRIFT

(11) **EP 1 198 391 B1**
(45) Veröffentlichungstag und Bekanntmachung des Hinweises auf die Patenterteilung: **09.11.2005**
(21) Anmeldenummer: 00948018.7
(22) Anmeldetag: 31.07.2000
(51) Int. Cl.: B65D 47/20

(54) **SELBSTSCHLIESSENDES VENTIL**
SELF-CLOSING VALVE
SOUPAPE A FERMETURE AUTOMATIQUE

(30) Priorität: 29.07.1999 DE 29913319 U; 09.08.1999 DE 19937549
(43) Veröffentlichungstag der Anmeldung: 24.04.2002
(73) Patentinhaber: Weener Plastik GmbH & Co. KG, D-26826 Weener (DE)
(72) Erfinder: FEIERABEND, Jens, D-26826 Weener (DE)
(74) Vertreter: Wallinger, Michael
(86) Internationale Anmeldenummer: PCT/EP2000/007388
(87) Internationale Veröffentlichungsnummer: WO 2001/008994

(56) Entgegenhaltungen:
- EP-A- 0 816 245
- WO-A-97/31837
- WO-A-98/38102
- US-A- 4 728 006

## Beschreibung

Die vorliegende Anmeldung betrifft ein selbstschließendes Ventil zur Ausgabe von fließfähigen Medien aus einem Behälter.

Es gibt eine Vielzahl von Flüssigkeiten und flüssigkeitsähnlichen Produkten, die in geeigneten Behältern an Verbraucher vertrieben werden.

Zu diesen Flüssigkeiten gehören z. B. Reinigungs- und Pflegeprodukte für den menschlichen Körper wie flüssige Seifen, Duschgele, Shampoos, Hautöle u. v. a. m. Eine weitere Gruppe derartiger Produkte ist den Nahrungs- und Genussmitteln zuzurechnen, beispielsweise Ketchup, Senf, Honig u. dergl. Eine dritte Gruppe derartiger Produkte sind Gebrauchsflüssigkeiten, wie beispielsweise technische Öle etc.

Den genannten Produkten ist gemeinsam, dass sie dem Behälter vom Verbraucher in relativ kleinen Mengen entnommen werden.

Herkömmliche Behälter weisen dazu eine auf einem Behälterhals aufgeschraubte Verschlusskappe auf. Zum Entnehmen der Flüssigkeit wird der Behälter gekippt und die Flüssigkeit entnommen. Je nach Viskosität der Flüssigkeit und Gebrauchszweck gibt es eine Vielzahl unterschiedlicher Ausgestaltungen, beispielsweise mit kleinen Ausbringöffnungen und elastischen Behältern, die zum Ausbringen der Flüssigkeit dann zusammengedrückt werden.

In der Patentliteratur gibt es zahlreiche Vorschläge, einen solchen Behälterverschluss mit einem selbstschließenden Ventil zu gestalten. Ein solches Ventil hat den Vorteil, dass der Benutzer nicht jedes Mal eine Verschlusskappe lösen muss, um die Flüssigkeit zu entnehmen.

Die Anforderungen an einen selbstschließenden Verschluss sind jedoch sehr hoch. Der Verschluss muss auf einfache Weise betätigbar sein, da er andernfalls keine Vorteile gegenüber herkömmlichen Schraubverschlüssen bietet, und muss andererseits über eine für den jeweiligen Einsatzzweck ausreichende Dichtigkeit verfügen.

In der EP-A-0 545 678 wird eine Verschlusskappe mit einem selbstschließenden Verschluss vorgeschlagen, bei dem eine gewölbte Membran Verwendung findet, die über eine Verbindungswand mit einem Halterungsrand verbunden ist. Die Verbindungswand ist derart zwischen der Membran und dem Halterungsrand angeordnet, dass sie sich zum Öffnen der Membran abrollt und eine Öffnungskraft auf die Membran ausübt, welche das Öffnen der Membran bewirken soll.

Ausgehend von diesem Stand der Technik stellt sich die vorliegende Erfindung die Aufgabe, ein selbstschließendes Ventil mit guten Öffnungs- und Dichtungseigenschaften zu schaffen, welches einen geringen Raumbedarf aufweist, in eine einfach gestaltete Verschlusskappe eingesetzt werden kann und einfach und kostengünstig herzustellen ist.

Diese Aufgabe wird erfindungsgemäß durch den Gegenstand des Anspruchs 1 gelöst.

Bevorzugte Weiterbildungen der Erfindung sind Gegenstand der Unteransprüche.

Durch die erfindungsgemäße Lösung wird ein selbstschließendes Ventil geschaffen, welches sich einerseits zuverlässig öffnet, wenn der Behälter in der Ausbringstellung mit Druck beaufschlagt wird, welches aber andererseits zuverlässig und dicht schließt.

Das erfindungsgemäße Ventil weist eine ringförmige Verbindungswand auf, die im Wesentlichen senkrecht zur Längsachse des Behälterverschlusses angeordnet ist oder, anders ausgedrückt, im Wesentlichen parallel zur Ebene ist, in der sich die Verschlussmembran erstreckt. Dabei wird die Beweglichkeit der Membran durch eine scharnierartige Gestaltung zwischen Zwischenwand und der Membran-Seitenwand erreicht, die eine angenähert biegeschlaffe Aufhängung der Membran bewirkt und somit verhindert, dass Momente von der Zwischenwand auf die Membran übertragen werden und umgekehrt.

Die Erfindung sieht eine gewölbte Membran vor, deren Wölbung in der Schließposition dem Behälterinneren zugewandt ist. Wird der Behälter in der Überkopfstellung, d. h. mit nach unten weisendem Ventil, zusammengedrückt, entsteht ein Überdruck im Behälter, und die Membran wird nach außen gewölbt, wobei sich Schlitze in der Membran öffnen und den Durchtritt der Flüssigkeit gestatten.

Die Membran und die Schlitze sind derart aufeinander abgestimmt, dass sich bei der Verformung der Membran nach außen elastische Rückstellkräfte in der Membran aufbauen, die das Schließen des Ventils bei Druckentlastung bewirken.

Vorzugsweise sind die Membran und die Verbindungswand rotationssymmetrisch gestaltet. Bei einer solchen Ausführungsform ist auch der Halteabschnitt vorzugsweise rotationssymmetrisch ausgebildet.

Die Membran ist vorzugsweise derart beschaffen, dass sie in der Ruheposition eine in etwa kugelabschnittsförmige Gestalt aufweist. Der Begriff "Kugelabschnitt" ist aber hier nur als Hinweis auf die grundsätzliche Gestaltung gedacht und soll keine exakte geometrische Definition der Form der Membran beinhalten.

Damit die Membran sich öffnen kann, ist sie mit Schlitzen versehen.

Insbesondere bei einer rotationssymmetrischen Membran kann man vier oder fünf Schlitze vorsehen, die sich jeweils von der Rotationsachse aus nach außen, d. h. zur Verbindungswand hin, erstrecken.

Gemäß einer bevorzugten Weiterbildung der Erfindung ist ein Schlitz vorgesehen, der sich dann über die Rotationsachse hin in radialer Richtung erstreckt.

Besonders bevorzugt weist die Membran aber drei Schlitze auf. Diese Schlitze sind bei einer rotationssymmetrischen Membrangestaltung derart angeordnet, dass sie sich von der Rotationsachse aus radial nach außen hin erstrecken. Der Winkel-Abstand der Schlitze ist vorzugsweise gleich und beträgt 120°.

Die Verwendung von drei Schlitzen hat besondere Vorteile.

Eine Schlitzung mit drei, vier oder fünf Schlitzen unterteilt die Membran in eine entsprechende Anzahl von spitz zulaufenden Lappen. Nach der Verformung und Öffnung müssen diese Lappen derart wieder zurückgeführt werden, dass sie mit ihren Schnittgrenzen genau aneinander anliegen. Eine geringfügige Desorientierung der Lappen führt dazu, dass die Lappen, insbesondere im Bereich ihrer Spitzen, übereinanderliegen, was einen dichtenden Kontakt der Lappen verhindert.

Bei lediglich einem mittigen Schlitz kann ein solches Problem nicht auftreten, da hier keine Lappen der vorstehend beschriebenen Art gebildet werden.

Der besonders bevorzugten Bauweise mit drei Schlitzen liegt die Erkenntnis zugrunde, dass ein derartiger Lappen, wenn er einen Winkelausschnitt von 120° umfaßt, gegen seitliche Verschiebungen und Desorientierungen sehr viel besser geschützt ist als ein Lappen, der lediglich 90 oder weniger Grad umfasst.

Gemäß einer weiteren, besonders bevorzugten Weiterbildung der Erfindung, die sich sowohl bei einem, vorzugsweise auch bei drei, vier, fünf oder mehr Schlitzen eignet, ist eine Schlitzgestaltung, bei welcher innerhalb des Schlitzes wenigstens ein Materialsteg verbleibt.

Dieser Materialsteg wirkt bzw. diese Materialstege wirken innerhalb der elastischen Membran wie elastische Zugfedern und ziehen den Schlitz beim Wiederverschließen zusammen.

Durch diese Gestaltung wird, wie später noch erläutert wird, ein Verschluss geschaffen, der trotz geringer Öffnungskräfte hohe Schließkräfte aufweist und eine sichere Führung der Verschlusslappen zur Anlage an ihre jeweiligen Seitenkanten bewirkt.

Die Membran und die Verbindungswand sind momentenmäßig entkoppelt, d. h. insbesondere dass die Bewegung der Membran möglichst wenig von Kräften und insbesondere von Momenten beeinflusst wird, die von der Verbindungswand auf die Membran übertragen werden könnten.

Dies wird durch eine scharnierartige Verbindung zwischen der Verbindungswand und der Membran bewirkt. Ein solches Scharnier kann auf unterschiedliche Weise hergestellt werden. Besonders bevorzugt ist eine im Verbindungsbereich zwischen Verbindungswand und Membran angeordnete Dünnstelle, die bei rotationssymmetrischer Membrangestaltung um die Membran umläuft. Bevorzugt ist diese Dünnstelle im Querschnitt S-förmig ausgestaltet, um die Scharnierwirkung zu verstärken.

Wie vorstehend beschrieben, ist der Übergangsbereich zwischen Verbindungswand und Membran bevorzugt derart gestaltet, dass insbesondere keine Momente von der Verbindungswand auf die Membran übertragen werden. Gemäß einer bevorzugten Gestaltung kann dieser Übergangsbereich auch dadurch geschaffen werden, dass das Material in diesem Bereich inhomogen ist, also dass z. B. in diesem Bereich ein anderes Material verwendet wird oder die Eigenschaften des Materials in geeigneter Weise beeinflusst werden, so dass die gewünschte Reduzierung der Fähigkeit der Momentenübertragung erreicht wird.

Das erfindungsgemäße Ventil kann aus allen Materialien hergestellt werden, die geeignete Werte für die elastische Verformung und die elastische Rückstellkraft aufweisen.

Besonders bevorzugt ist es, die Membran und/oder die Verbindungswand aus einem Silikonmaterial herzustellen. Weiterhin ist die Herstellung von Membran und/oder Verbindungswand aus einem thermoplastischen Elastomer möglich. Vorzugsweise bestehen Verbindungswand, Halterungsabschnitt und Membran dabei aus dem gleichen Material und bilden einen Ventilkörper.

Besonders bevorzugt ist der Halteabschnitt des selbstschließenden Ventils durch eine Kunststoffeinrichtung, bei rotationssymmetrischer Gestaltung des Ventils einen Kunststoffring, verstärkt, der, im Vergleich zum Material der Verbindungswand und der Membran, aus einem steiferen und gegebenenfalls auch preisgünstigeren Kunststoffmaterial hergestellt ist.

Gemäß einer bevorzugten Ausführungsform wird an den Halteabschnitt ein Verstärkungsring aus einem härteren Kunststoff angespritzt. Dabei ist es bevorzugt, den Kunststoffring in einem vorangehenden Fertigungsverfahren unabhängig von dem selbstschließenden Ventil herzustellen und in diesem Verstärkungsring eine Vielzahl von Durchbrüchen vorzusehen, in welche das Material des Ventils beim Spritzvorgang eindringen kann, so dass eine innige, haltbare und zudem preisgünstige Verbindung zwischen Verstärkungsring und Ventilkörper entsteht.

Bevorzugt wird als Material für den Verstärkungsring Polyamid verwendet.

Das Spritzverfahren kann besonders bevorzugt derart gestaltet werden, dass Polyamidring und Silikonmembran unmittelbar hinter einander gespritzt werden, und zwar in der Art und Weise, dass zunächst in das Spritzwerkzeug das Polyamid eingespritzt wird, das Spritzwerkzeug anschließend geöffnet wird und das Spritzwerkzeug dann in eine andere Anordnung der Hohlräume zueinander gebracht wird, und dann in diesen geänderten Hohlraum das Silikon eingespritzt wird. Gleichzeitig wird in einen zweiten, oder wenn, wie bevorzugt, in mehrere Ventile gleichzeitig gespritzt wird, in eine Anzahl von zweiten Hohlräumen wiederum das Polyamidmaterial für die Herstellung des Rings eingespritzt.

Es ergibt sich somit ein erster Takt, in dem nur Polyamidringe gespritzt werden und dann werden jeweils taktweise Polyamidringe gespritzt und gleichzeitig das Silikon auf die im Takt zuvor gespritzten Polyamidringe gespritzt, so dass dann jeweils taktweise ein, bzw. die Gesamtanzahl der in einem Takt zu spritzenden fertigen Ventile entsteht.

Es wäre angemerkt, dass eine solche Vorgehensweise nicht auf die Materialien Polyamid und Silikon beschränkt ist, sondern auch mit anderen Materialien, thermoplastischen Elastomeren etc. ausgeführt werden kann.

Unter den in der vorliegenden Beschreibung verwendeten Begriffen "Fluid", "Flüssigkeiten" und "Medium" bzw. "fließfähiges Medium" sollen alle Stoffe verstanden werden, deren Viskosität, unabhängig davon, ob diese Viskosität als dynamische oder als kinematische Viskosität bestimmt ist, ein Ausströmen des Stoffes aus einem Behälter, gegebenenfalls durch eine zusätzliche Druckbeaufschlagung, ermöglicht. Es sind also nicht nur solche Stoffe in diese Begriffe einbezogen, die von selbst strömen, wie z. B. wasserartige Stoffe, sondern auch Stoffe, die nur dann strömen, wenn sie mit Druck beaufschlagt werden, wie z. B. fettartige und pastenartige Stoffe.

Gemäß einer ersten bevorzugten Verwendung wird der Verschluss für Nahrungsmittel verwendet, und hier für Nahrungsmittel, die einer Gruppe entstammen, die folgende Nahrungsmittel umfasst: Gemüse- und Obstsäfte und sonstige Getränke, Würzsoßen aller Art, wie Sojasoße und dergleichen, zähfließende Würzstoffe, wie Senf, Ketchup, Mayonnaise, zähfließende Nahrungsmittel, wie Honig, Gelees, Marmeladen, Milchprodukte, wie Milch, Kondensmilch, Sahne und dergleichen.

Bevorzugt ist ferner die Verwendung des Ventils bei der Verpackung von Körperpflege- und Reinigungsmitteln, wie flüssige oder pastenförmige Seife, Duschgele, Hautöle, Sonnenschutzmittel, Shampoos, Haarfärbemittel, Hautcremes, Deodorants etc..

Bevorzugt ist die Verwendung des Ventils ferner für sonstige Reinigungs- und Pflegemittel, wie Spülmittel, Universalreinigungsmittel, Schuhcremes, Poliermittel, Fleckenentfernungsmittel, flüssige Waschmittel und dergleichen.

Bevorzugt ist die Verwendung des Verschlusses weiterhin für pharmazeutische Produkte, und vorzugsweise für Produkte die in kleineren Mengen gebraucht werden, wie z. B. Augentropfen, Nasentropfen, Desinfektionsmittel, und alle Formen von pharmazeutischen Produkten, gleichgültig, ob sie zur inneren oder äußeren Anwendung bestimmt sind.

Bevorzugt ist weiterhin eine Verwendung für technische Produkte, beispielsweise für Farben, Lacke, Lösungsmittel, Schmiermittel und sonstige technische Chemikalien und Stoffmischungen.

Weitere Vorteile, Merkmale und Anwendungsmöglichkeiten der vorliegenden Erfindung ergeben sich aus der Beschreibung von Ausführungsbeispielen in Zusammenhang mit der Zeichnung.

Darin zeigen:
- Fig. 1: einen Schnitt durch den Verschluss eines Behälters in der Überkopfstellung, wobei in dem Verschluss ein erstes Ausführungsbeispiel eines selbstschließenden Ventils nach dem Stand der Technik angeordnet ist;
- Fig. 2: eine Unteransicht des Ausführungsbeispiels gemäß Fig. 1;
- Fig. 3: das Ausführungsbeispiel gemäß Fig. 1 in geöffnetem zustand;
- Fig. 4: eine Aufsicht auf die Darstellung gemäß Fig. 3;
- Fig. 5: ein Ausführungsbeispiel eines Ventils in einer Schnittdarstellung;
- Fig. 6: eine Unteransicht des Ventils gemäß Fig. 5, in Richtung des Halterings gesehen;
- Fig. 7: ein Detail des Ventils gemäß Fig. 5 in einer Schnittdarstellung;
- Fig. 8: ein Ausführungsbeispiel des erfindungsgemäßen Ventils in Schnittdarstellung.

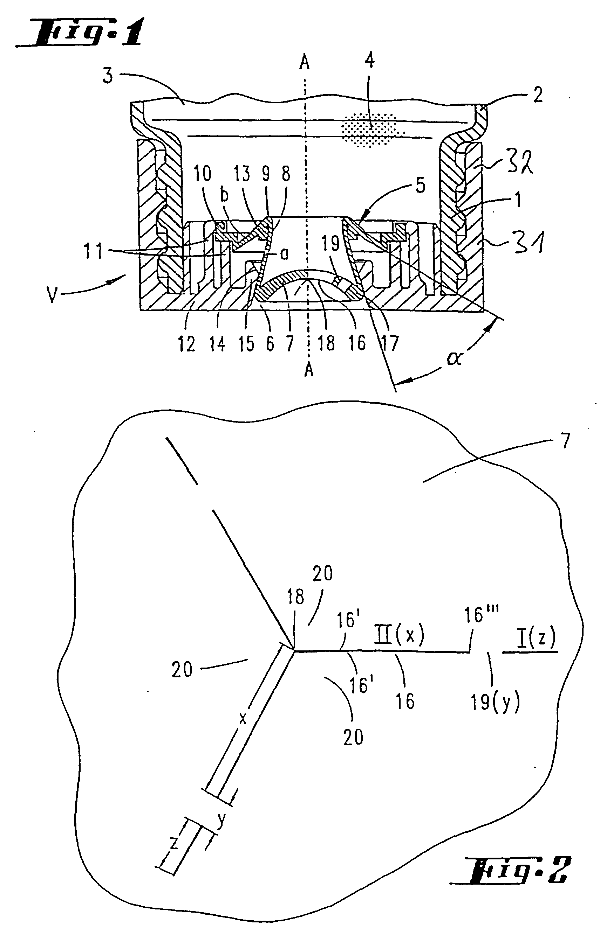

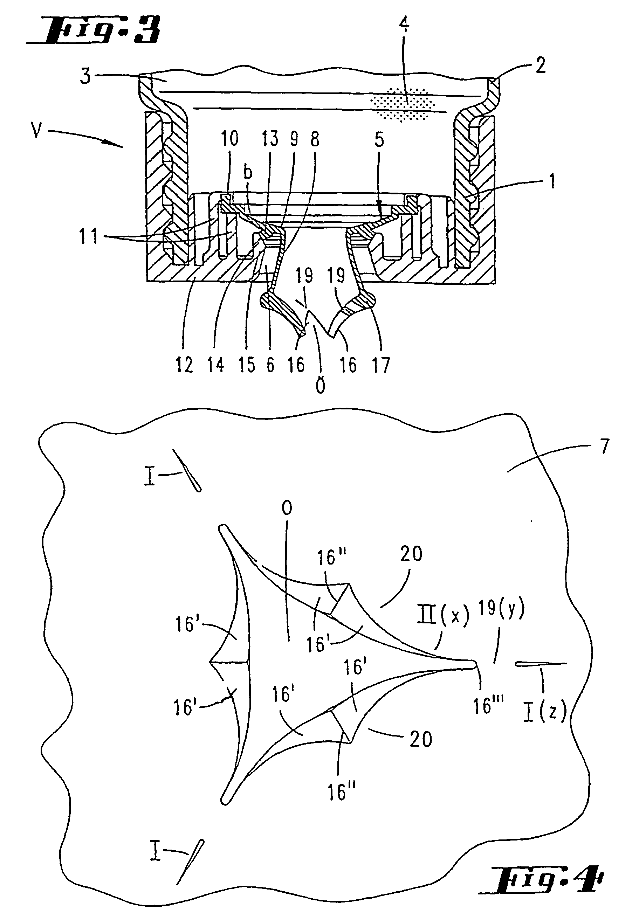

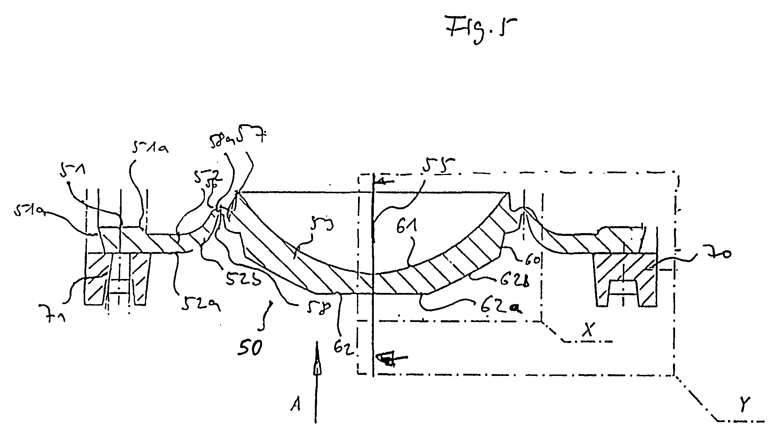

Der in Fig. 1 gezeigte Verschluss ist in seiner Gesamtheit mit V bezeichnet. Der Verschluss ist auf einen mit einem konventionellen Gewinde versehenen Hals 1 eines Behälters 2 aufgeschraubt. Im Inneren dieses Behälters, durch das Bezugszeichen 3 dargestellt, befindet sich das symbolisch mit dem Bezugszeichen 4 bezeichnete Fluid oder Medium, dessen Viskosität derart gewählt ist, dass es aus einem Verschluss der hier in Rede stehenden Art ausströmen kann. Die Behälterwand besteht vollständig oder teilweise aus flexiblem Material, das vom Benutzer zusammengedrückt werden kann.

Der Hals 1 des Behälters 2 ist zylindrisch gestaltet, der Behälter kann eine davon abweichende Form aufweisen. Auf den Hals 1 ist eine zylindrische Verschlusskappe 31 aufgeschraubt, die ein zylindrisches Teil 32 aufweist, das mit einem zum Außengewinde des Halses 1 passenden Innengewinde versehen ist.

Es wird darauf hingewiesen, dass die Verschlusskappe nicht zwingend auf den Behälterhals aufgeschraubt werden können muss. Es sind auch andere Konstruktionen denkbar, z. B. eine Verschlusskappe, die durch Vorsprünge auf dem Behälterhals gehalten ist, und auf dem Behälterhals oder auf dem Behälter selbst aufgedrückt, aufgeklipst oder sonstwie durch Reibung, Kleben oder dergleichen befestigt ist.

In dieser Verschlusskappe 31 ist eine zentrale Öffnung 6 vorgesehen, durch welche das Medium 4 hindurchströmen kann.

An dieser Strömung wird das Medium 4 durch das insgesamt mit 5 bezeichnete selbstschließende Ventil gehindert.

Das Ventil 5 weist eine Membran 7 auf, die kugelsegmentartig nach innen, zum Behälterinneren 3 und zum Medium 4 hin gewölbt ist, wenn sich das Ventil, wie in Fig. 1 gezeigt, in der Schließposition befindet.

An die Membran 7 schließt sich die Verbindungswand 8 an, welche über einen Krümmungsbereich 9 mit dem Halteabschnitt 10 verbunden ist. Dieser Halteabschnitt 10 wird im montierten Zustand von zwei zylindrischen Stegen 11, die an den im Wesentlichen kreisringförmigen Deckelbereich 12 des Verschlusses 31 angeformt sind, gehalten. Der Ventilkörper besteht aus Membran, Verbindungswand und Halteabschnitt und ist einstückig ausgebildet. Der Deckel 12 ist so gestaltet, dass der Behälter insgesamt auf dem Deckel und damit auf dem Verschluss kopfstehend aufbewahrt werden kann.

Diese Art der Aufbewahrung, bzw. die entsprechende technische Gestaltung, die diese Art der Aufbewahrung erlaubt, hat den Vorteil, dass der Raum über der Membran immer mit Flüssigkeit gefüllt ist, so dass der Entnahmevorgang auch bei zähflüssigen Medien nicht davon abhängig ist, dass zunächst die Flüssigkeit in das Ventil einfließen muss.

Die Membran 7 ist, wie später noch erläutert wird, nicht mit gleichmäßiger Wandstärke ausgebildet, sondern die Wandstärke nimmt zur Mitte hin ab.

Die Verbindungswand 8 selbst ist bei diesem Ausführungsbeispiel deutlich dünner gehalten als die Membran.

Die Verbindungswand besteht aus dem Teil a, der unmittelbar an der Membran anliegt, und aus dem Teil b, der über den bogenförmigen Bereich 9 mit dem Bereich a verbunden ist. Zwischen den Bereichen a und b liegt, wie in Fig. 1 angedeutet, ein Winkel α von ungefähr 45° in der Schließposition.

Im Bereich b der Zwischenwand ist ein Ringwulst 13 einstückig mit der Verbindungswand und von dieser radial nach außen ragend ausgebildet.

Der Ringwulst liegt beim geöffneten Ventil, wie in Fig. 3 zu sehen ist, an einer Schulter 14 eines von der Verschlusskappendecke aus nach innen ragenden Ringwulstes 15, der im Wesentlichen rotationssymmetrisch ausgestaltet ist, an.

Die Schulter 14 ist derart gestaltet, dass ihre Schrägung unmittelbar dem Winkel des Ringwulstes 13 in der geöffneten Position entspricht.

Der Ringwulst 15 erweitert sich vom Behälterinneren 3 abgewandt konisch nach außen und bildet damit eine Führung, die den Zwischenwandbereich a bei dem Öffnen des Ventils führt.

Zusätzlich, aber in Fig. 1 nicht dargestellt, kann ein klappbarer Deckel vorgesehen sein, der die Membran, z. B. mit einem halbkugelförmigen Aufsatz in der in Fig. 1 gezeichneten Position hält und als Sicherung beim Transport dient.

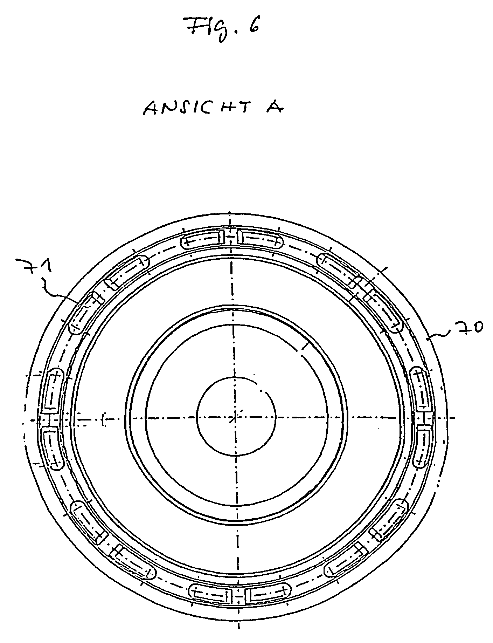

Die Membran 7 ist geschlitzt, wie nun in bezug auf die Figuren 2 bis 4 weiter erörtert wird.

Das Ventil und die Membran sind insgesamt rotationssymmetrisch gestaltet, wobei die Rotationsachse in Fig. 1 der Linie A-A entspricht.

Die Membran weist, wie in Fig. 2 zu sehen, insgesamt drei Schlitze auf, die von dem Punkt ausgehen, an dem die Rotationsachse die Membran durchstößt, wobei dieser Punkt das Bezugszeichen 18 trägt.

Die drei Schlitze sind ebenfalls symmetrisch angeordnet und schließen zueinander einen Winkel von 120° ein. Die Länge der Schlitze im Verhältnis zur Membran ergibt sich aus der Darstellung gemäß Fig. 1, danach nimmt ein Schlitz ca. einen Bereich zwischen 3/5 und 4/5 des Membranradius ein. Die Schlitze selbst sind mit einem Messerwerkzeug geschnitten, wobei der Schnitt vorzugsweise in der Position des Ventils ausgeführt ist, wie sie in der Fig. 1 dargestellt ist. Die Schlitze erstrecken sich dann in einer Ebene, die senkrecht zum Kappendeckel 12 verläuft und die Symmetrieachse A-A einschließt.

Jeder Öffnungsschlitz 16 hat insgesamt die gleiche Länge, die sich in der Darstellung gemäß Fig. 2 sich aus den Streckenlängen x + y + z zusammensetzt.

Beim Ausführungsbeispiel besteht jeder Schlitz aus einem inneren Abschnitt II, der vorzugsweise mehr als die Hälfte der gesamten Schlitzlänge beträgt, an den sich eine nicht geschlitzte Materialbrücke 19 anschließt. Danach wird der Schlitz im Abschnitt I fortgesetzt. Der erste Abschnitt II hat die Schlitzlänge x, die Materialbrücke die Schlitzlänge y und der sich daran anschließende Schlitz die Länge z. Die Materialbrücke 19 und damit die Länge y ist vorzugsweise etwas kleiner als die Länge I.

Diese Gestaltung der Schlitzung hat erhebliche Vorteile für das Öffnen und Schließen der Schlitze.

Wie aus der sogenannten Membrantheorie bekannt ist, entsteht innerhalb einer belasteten elastischen Membran ein komplexer mehrachsiger Spannungszustand. Die Spannungsverteilung in der Membran erschwert insbesondere das Schließen der Membran, da bei einem Spannungsanteil, der eine Kraft in eine Richtung erzeugt, die nicht parallel zum jeweiligen Schlitz ist, die einzelnen, durch die Schlitze eingeschlossenen Lappen 20 die Tendenz haben, mit ihren Kanten übereinander zu liegen zu kommen.

Durch die Materialbrücke 19 und den dahinterliegenden Schlitzabschnitt I entsteht ein definierter Spannungszustand, der das Schließen der Lappen deutlich begünstigt.

Dies geschieht zum einen dadurch, dass die Materialbrücke 19 im Wesentlichen nur einer einachsigen Spannung in einer Richtung senkrecht zum jeweiligen Schlitz unterworfen ist. Beim Öffnen der einzelnen Lappen wirkt die Materialbrücke 19 somit wie eine einfache Zugfeder, die keine Verschiebekräfte der Schlitze gegeneinander erzeugen kann, sondern die wie ein Gummiband wirkt, welches beim Öffnen der Lappen gedehnt wird und durch die Rückstellkraft die Tendenz hat, die Lappen wieder zusammenziehen.

Der nach der Materialbrücke 19 liegende Schlitzabschnitt I verstärkt diese, Tendenz, da er Spannungen, in einer Richtung, die nicht senkrecht zur Schlitzebene liegen, von der Materialbrücke 19 fernhält. Damit ist gewährleistet, dass innerhalb der Materialbrücke 19 im Wesentlichen nur Kräfte senkrecht zur Schlitzebene wirksam werden.

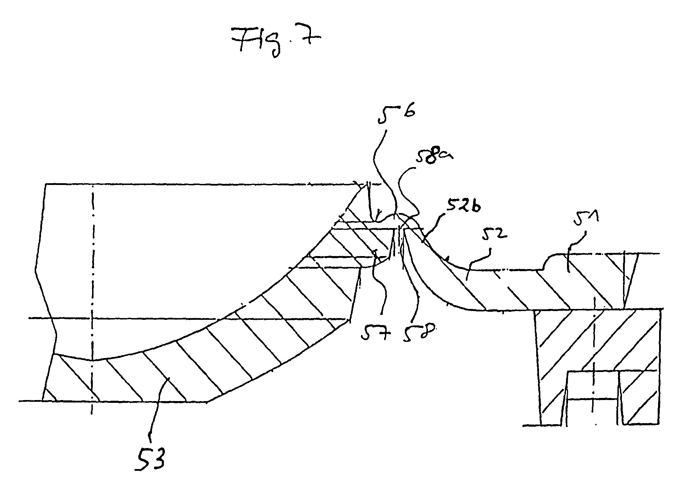

Die Funktion dieses Verschlusses wird nachfolgend, insbesondere in bezug auf die Figuren 3 und 4 beschrieben.

Wenn der Benutzer Flüssigkeit aus dem Behälter 2 entnehmen will, öffnet er eine ggf. vorhandene (in der Fig. nicht dargestellte) Klappe, wodurch die Durchtrittsöffnung 6 im Verschlussdeckel freiliegt.

Dann drückt er mit der Hand die flexiblen Wandungen des Behälters 2 zusammen, wodurch sich ein Überdruck im Behälter aufbaut. Dieser Überdruck bewirkt, dass der Abschnitt b der Verbindungswand a nach unten umklappt und sich der Ringwulst 13 an die Schulter 14 anlegt. Da dieser Vorgang ein Umklappen ist und keine Rollbewegung der Membran erfordert, ist dieser Vorgang sehr einfach und zuverlässig zu realisieren.

Der Druck wird schließlich so groß, dass er die elastischen Rückstellkräfte der Membran überwindet und sich die Lappen nach außen öffnen, wie dies in Fig. 4 dargestellt ist, wodurch die Öffnung O entsteht.

Das Material beginnt dann aus der Öffnung O auszuströmen, wobei der Strömungsvorgang sich so lange fortsetzt, wie ein Überdruck im Behälter durch das zusammendrücken durch den Benutzer erzeugt wird.

Wenn der Benutzer die Behälterwände entlastet, weiten sich die Behälterwände auf, der Druck sinkt, und die Lappen schließen sich. Die Schließbewegung wird dabei wesentlich durch die Materialbrücken 19 erleichtert. Diese Materialbrücken haben hohe elastische Rückstellkräfte, wenn die Lappen sich über die Ebene hinweg bewegen, die senkrecht zur Rotationssymmetrieachse A-A ist und bewirken dann ein kraftvolles Schließen der Lappen, degepresst werden und somit einen sicheren Verschluss bilden. Beim Schließvorgang wird, durch den im Behälter 3 herrschenden Unterdruck, sogar das noch im Öffnungsbereich befindliche Material in den Behälter zurückgesaugt, so dass keine Rückstände des Mediums an der Außenseite der Lappen 20 haften und von dort nach unten fallen könnten. Insbesondere durch die dreieckförmige Gestaltung mit drei Schlitzen schmiegen sich die Kanten der Lappen 20 selbstzentrierend aneinander und verhindern, dass im Bereich der Rotationsachse 18 (Fig. 2) eine Öffnung übrigbleibt.

Die Wirkung, die die angewandte Schlitzung mit sich bringt, ist vornehmlich die, dass die Rückstellkraft des Ventils erhöht wird, und zwar unabhängig vom Belüftungsgrad, indem die Stege bzw. Materialbrücken 19, wie schon gesagt, wie Gummibänder wirken, die das Ventil kraftvoll in seine Ursprungsposition zurückziehen. Hieraus resultiert, dass das Ventil am Ende einer Entnahme auf jeden Fall wieder vollständig geschlossen ist. Unterschiedliche Parameter zwischen Länge der Abschnitte I, II und der in dieser Richtung gemessenen Länge der Materialbrücke 19 sind nützlich, um das Ventil für unterschiedliche Medien einsetzen zu können. So werden beispielsweise durch Unterbrechung der Stege die Öffnungskräfte noch weiter herabgesetzt. Es genügen in der Tat recht schmale Materialbrücken. Gemäß einer anderen Ausgestaltung ist es andererseits nicht erforderlich, die Öffnungsschlitze zu unterbrechen, wenn die Rückstellkraft allein durch eine Reduzierung der Parameter x + y + z erreicht wird, ohne die Öffnungskräfte zu beeinträchtigen. Im einen Fall sieht die Version so aus, dass die Schlitze unterbrochen sind mit den Maßen z, y, x. Die Maße variieren über den ganzen Durchmesser der Verschlussdecke 7. Gemäß einer anderen Version sind die Öffnungsschlitze 16 nicht unterbrochen, sondern nur unterschiedlich lang, das heißt, das Maß z + y + x variiert in dem gesamten Durchmesser der Membran 7.

Wie sich aus dem Vorstehenden ergibt, hat die Gestaltung der Schlitze wesentlichen Einfluss auf die Fähigkeit der Membran, sich zu öffnen und zu schließen.

Die Anwendung dreier Schlitze hat den besonderen Vorteil, dass sich die Schlitze hier selbstzentrierend aneinander abstützen können. Die Verwendung von Materialbrücken oder Stegen hat den Vorteil, dass über einen einachsigen Spannungszustand elastische Rückstellkräfte aufgebaut werden können.

Die Länge der Schlitze und die Breite dieser Materialbrücken sowie auch die Anzahl der Materialbrücken (es können pro Schlitz auch zwei oder mehr Materialbrücken vorgesehen sein) kann variiert werden, um das Öffnungs- und Schließverhalten an verschiedene Medien anzupassen.

Bei einer Gestaltung mit drei, vier, fünf oder mehr Schlitzen können alle Schlitze mit der gleichen Länge ausgeführt werden. Dies ist bei einer rotationssymmetrischen Gestaltung der Ventilmembran und einer rotationssymmetrischen Anordnung des Mittelpunktes einer sternförmigen Schlitzung mit drei, vier, fünf oder mehr Schlitzen bevorzugt.

Bei einer sternförmigen Schlitzung mit drei, vier, fünf, oder mehr Schlitzen kann die Länge der einzelnen Schlitze aber auch unterschiedlich gestaltet sein, so dass die Schlitzung selbst nicht rotationssymmetrisch ist. Es ist ferner möglich, auch bei einer rotationssymmetrisch gestalteten Membran die Schlitze so anzuordnen, dass der gemeinsame Punkt aller Schlitze auf der Membran nicht mit deren Rotationsachse zusammenfällt. Es ist weiterhin möglich, bei einer Gestaltung mit drei, vier, fünf oder mehr Schlitzen eine sternförmige Gestaltung mit gleicher oder unterschiedlicher Schlitzlänge vorzusehen, bei welcher der Winkel zwischen den einzelnen Schlitzen nicht gleich ist. Bei vier Schlitzen können die Schlitze z. B. so gestaltet sein, dass sie zu dem einen benachbarten Schlitz einen Winkel von > 90°, zum anderen benachbarten Schlitz einen Winkel von < 90° einschließen.

Es ist.schließlich auch möglich, in der Membran mehrere Schlitze vorzusehen, die nicht in Verbindung miteinander stehen, so dass bei einer Druckbelastung der Membran mehr als eine Öffnung O entsteht.

Durch die in der Schließposition nach innen gewölbte Form der Membran stützen sich die Schnittkanten der Lappen 20 gewölbeartig aufeinander ab, wodurch hohe Haltekräfte entstehen. Gleichzeitig reichen aber bereits geringe Kräfte aus, um die Lappen nach innen hin durch Unterdruck zu öffnen, so dass das Zurücksaugen des Mediums in den Behälter begünstigt wird.

Die Schlitzung mit Materialbrücken wurde vorstehend in bezug auf eine Membran mit drei Schlitzen beschrieben. Es sei jedoch darauf hingewiesen, dass eine entsprechende Schlitzung mit Materialbrücken auch durchgeführt werden kann, wenn nur ein Schlitz vorhanden ist, der sich dann über die Rotationsachse hinweg erstreckt, aber auch beim Vorhandensein von vier oder fünf Schlitzen. Auch hier wird man dann Schlitzlänge und Materialbrücken in entsprechender Weise aufeinander abstimmen.

Die Figuren 5, 6 und 7 zeigen ein weiteres Schließventil. Dieses Schließventil kann in einer ähnlichen Weise in eine Verschlusskappe eingesetzt werden, wie dies beim Schließventil gemäß den Fig. 1 - 4 der Fall ist. Das Schließventil weist aber einige Abweichungen vom Schließventil gemäß Fig. 1 - 4 auf, die nachfolgend im einzelnen erläutert werden.

Zunächst ist darauf hinzuweisen, dass die Gestaltung der Membran und insbesondere die verschiedenen Ausführungen der Schlitzungen die gleichen sind wie beim Ventil gemäß den Fig. 1 - 4. Auf die Schlitzung wird deshalb nicht nochmals im einzelnen eingegangen.

Das insgesamt mit 50 bezeichnete Ventil weist einen Haltering 51, eine Verbindungswand 52 und eine insgesamt mit 53 bezeichnete Membran auf.

Der Haltering 51 ist ringförmig gestaltet und weist eine konische Abschrägung 51a an seinem Außenumfang auf.

Der Haltering 51 geht einstückig in die Verbindungswand 52 über.

Haltering, Verbindungswand und Membran sind rotationssymmetrisch gestaltet, wobei die Rotationsachse mit 55 bezeichnet ist.

Der Haltering 51 liegt in einer Ebene, die senkrecht zur Rotationsachse 55 ist.

Die Verbindungswand 52 besteht aus einem ringförmigen vorderen Teil 52a, welches sich im Wesentlichen in der gleichen Ebene erstreckt wie der Haltering 51, d. h. ebenfalls senkrecht zur Rotationsachse 55 des Ventils. Am vorderen Teil der Verbindungswand 52 ist der Bereich 52b vorgesehen, der sich gebogen in einem stumpfen Winkel aus (in der Darstellung gemäß Fig. 5) nach oben hin erstreckt, d. h., wenn das Ventil auf den Behälter aufgesetzt ist, vom Behälterinneren weg.

Dieser nach oben gekrümmte Bereich 52b der Verbindungswand 52 geht in das Scharnierteil 56 über, welches über einen Verbindungsbereich 57 in die Membran 53 übergeht.

Das Scharnierteil 56 weist, von der Behälterseite aus gesehen, einen scharfen Einschnitt 58 auf, der, im Querschnitt gesehen, trapezförmig gestaltet ist.

Die unterste Wand dieser Vertiefung (in der Darstellung gemäß Fig. 5 ist dies die obere Kante) 58a ist im Verhältnis zur Tiefe des Einschnittes relativ schmal und beträgt vorteilhaft die Hälfte, besonders vorteilhaft ein Drittel bis zu einem Fünftel der Einschnitttiefe.

Die in Fig. 5 dargestellte Form der Membran ist für die Funktion des Verschlusses vorteilhaft. Der Verbindungsbereich 57 weist, benachbart zum Einschnitt 58, eine im Wesentlichen geradlinig verlaufende Seitenwand auf, die in ihrer gedachten Verlängerung mit der Achse 55 einen spitzen Winkel von vorzugsweise 60 bis 85° einschließt. An diese Seitenwand schließt sich ein kurzes Bogenstück an, welches in seiner Haupterstreckung mit der Achse 55 einen stumpfen Winkel von 140 bis 170° einschließt. Der obere, vom Einschnitt 58 abgewandte Teil des Verbindungsbereiches 57 weist eine im Wesentlichen S-förmige Gestaltung auf.

Wie.in Fig. 5 gut zu erkennen ist, ist der Verbindungsbereich 57 nicht symmetrisch an die Seitenwand 60 der Membran angeordnet, sondern ist in Fig. 5 nach oben hin, d. h. vom Behälterinneren weg versetzt.

Die Membran ist ferner in ihrer nach außen zugeordneten Fläche 61 im Wesentlichen durchgehend gekrümmt, wobei die Krümmung vorzugsweise einer Funktion zweiten Grades angenähert ist.

Die entgegengesetzte Wand 62, die dem Behälterinneren zugewandt ist, besteht aus einer kreisscheibenförmigen Platte 62a, einer in der Querschnittsdarstellung linear und in einem spitzen Winkel zur Achse 55 verlaufenden Übergangsbereich 62b, an den sich die bereits erwähnte Seitenwand 60 anschließt. Der spitze Winkel liegt vorzugsweise im Bereich zwischen 40 und 80°, besonders bevorzugt im Bereich zwischen 50 und 60°.

Durch die beschriebene Querschnittsgestaltung der Membranwände nimmt die Dicke der Membran kontinuierlich von ihrem Mittelpunkt, den die Rotationsachse 55 schneidet, bis hin zur Seitenwand zu.

Dabei ist die Dicke der Membran in dem Bereich, wo die kreisscheibenförmige Seitenwand 62a, die eine Ebene senkrecht zur Rotationsachse 55 bildet, in den konischen Bereich 62b, der im Querschnitt einen spitzen Winkel mit der Rotationsachse 55 bildet, übergeht, ungefähr doppelt so groß ist wie die Stärke der Membran im Bereich der Rotationsachse. Die äußere Seitenwand 60 der Membran weist eine Dicke auf, die, parallel zur Rotationsachse 55 gemessen, in etwa dem 3- bis dem 4-fachen der Dicke der Membran in der Mitte entspricht.

Die Membran ist vorzugsweise aus einem Silikonmaterial hergestellt, es kommen aber auch andere Kunststoffmaterialien, wie thermoplastische Elastomere usw. in Frage.

Es wurde in Versuchen gefunden, dass eine nach vorstehender Beschreibung gefertigte Membran aus einem Silikonmaterial mit einer Schlitzung, wie sie in bezug auf die Figuren 2 und 4 beschrieben worden ist, besonders gute Eigenschaften bezüglich des Öffnens und des Schließens aufweist. Eine derart gestaltete Membran öffnet leicht und mit einem relativ großen Öffnungsdurchmesser, der Öffnungszustand kann mit geringem Überdruck aufrecht erhalten werden und schließt, sobald der Überdruck entfällt, zuverlässig und dicht ab, wobei Rückstände des Mediums, die sich im Bereich der Öffnung befinden, beim Verschließen wieder in dem Behälter zurückgesaugt werden.

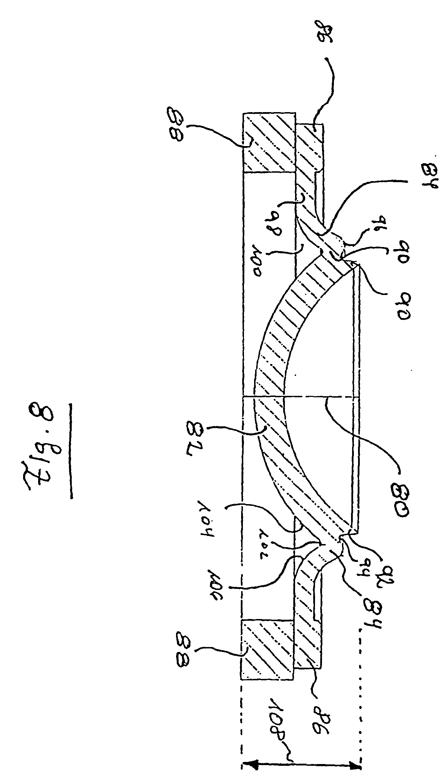

Eine weitere Besonderheit der Gestaltung gemäß Figur 6 ist der zusätzliche Haltering 70. Dieser Haltering weist, wie aus Figur 6 ersichtlich, eine Vielzahl von in Umfangsrichtung angeordneten Durchbrechungen 71 auf, welche sich im Querschnitt, wie insbesondere aus Figur 5 ersichtlich ist, nach unten hin, d. h. vom Kontaktbereich mit dem Halteabschnitt 51a des in Figur 5 dargestellten Ventils, weg weisend erweitern.

Der Haltering 70 besteht aus einem härteren, weniger elastischen Kunststoffmaterial als das Material der eigentlichen Membran.

Das Ventil gemäß den Figuren 5 und 6 wird wie folgt hergestellt:

Zunächst wird in einem separaten Arbeitsgang der Haltering 70 aus dem entsprechenden Kunststoffmaterial spritzgegossen.

Der Haltering wird dann in die Spritzform des Ventilkörpers eingesetzt und es wird, beim Ausführungsbeispiel, Silikonmaterial in die Spritzform eingespritzt. Dabei dringt das Silikonmaterial in die Durchbrüche 71 ein.

Das Silikonmaterial wird dann für einen längeren Zeitabschnitt bei geeigneten Temperaturen getempert.

Nach der Fertigstellung des Ventilkörpers wird das Ventil geschlitzt, wie dies in Figur 2 gezeigt ist.

Anschließend wird das Ventil in eine Verschlusskappe ähnlich der Darstellung der Figur 1 eingesetzt, die derart gestaltet ist, dass sie den Haltering 70 in entsprechender Weise aufnimmt.

Fig. 8 zeigt ein Ausführungsbeispiel eines erfindungsgemäßen Schließventils, welches in ähnlicher Weise wie das Schließventil gemäß Fig. 1 bis 4 in eine Verschlusskappe eingesetzt werden kann. Die Funktionsweise und Ausbildung der Membran sowie insbesondere die Schlitzung dieser Membran gleicht insbesondere denen, die im Rahmen der Figurenbeschreibung 1 bis 4 bereits erläutert wurden.

Das Ventil gemäß Fig. 8 weist jedoch einige Besonderheiten auf, auf die im Folgenden insbesondere eingegangen werden soll.

Das sich im Wesentlichen rotationssymmetrisch zur Achse 80 erstreckende Ventil weist eine Membran 82 auf, an welche einstückig eine Verbindungswand 84 angeformt ist, welche im Wesentlichen radial innenliegend des ersten Halterings 86 angeordnet ist, welcher einstückig mit der Verbindungswand 84 sowie der Membran 82 verbunden ist. Der erste Haltering 86 kontaktiert einen zweiten Haltering 88, welcher im montierten Zustand des Ventils auf der behälterzugewandten Seite des ersten Halterings 86 angeordnet ist.

Die Membran ist hohlkugelsegmentförmig ausgebildet oder in ihrer Ausbildung an eine derartige Form angenähert. Die sich von den radial außen liegenden Punkten der Membran 82 zum Krümmungsmittelpunkt erstreckenden Verbindungslinien spannen vorzugsweise einen Kegel auf, dessen Öffnungswinkel im Bereich zwischen 45 und 135° liegt und welcher besonders bevorzugt in etwa 90° beträgt. Die Membran 82 weist zumindest im überwiegenden Teil ihrer Wandung eine konstante Wandstärke auf. Im Übergangsbereich 90 zwischen der Membran 82 und der Verbindungswand ragen in behältnisabgewandter Richtung Erhöhungen 92 hervor, die insbesondere spitz ausgebildet sind.

Als behältnisabgewandte Seite bzw. Richtung wird im Folgenden die Seite bzw. Richtung bezeichnet, die in Richtung der Achse 80 der Behältnisaußenseite zugewandt ist, wenn das Ventil auf einem Behältnis montiert ist. In entsprechender Weise wird die im montierten Zustand in Richtung der Achse 80 dem Behältnisinnenraum'zugewandte Richtung bzw. Seite vereinfachend als dem Behältnisinnenraum zugewandte Richtung bzw. Seite bzw. als Innenseite bezeichnet.

Die ringförmige Erhöhung 92 wird insbesondere in Richtung der Achse 80 durch einen Abschnitt begrenzt, welcher Bestandteil einer Kugelfläche ist und/oder welcher sich an eine Kugelfläche anschließt, und zwar derart, dass dieser Abschnitt gegenüber dem diesem Abschnitt zugewandten Kugelendbereich zumindest leicht nach außen geneigt ist, so dass der Abschnitt mit der Achse 80 einen Winkel einschließt, der stumpfer ist als der Winkel, den die Tangenten im Endbereich der kugelförmigen Fläche mit dieser Achse 80 einschließen. Auf der von der Achse 80 abgewandten Seite wird die Erhöhung 92 durch eine Fläche begrenzt, die im Wesentlichen steil abfällt und mit der Achse 80 einen Winkel einschließt, der vorzugsweise kleiner als 45°, besonders bevorzugt kleiner als 10° ist. Die außen liegende Ventiloberfläche verläuft in radial nach außen gerichteter Richtung im Anschluss an diese Erhöhung 92 im Wesentlichen geschwungen, und zwar insbesondere wellenförmig bzw. S-förmig geschwungen. Dabei schließt sich an die Erhöhung 92 ein Einschnitt 94 an, der in seinem behälterzugewandten Bodenbereich abgerundet ausgebildet ist und an den sich in radial außen liegender Richtung ein ringförmiger, zur Behälteraußenseite hervorstehender abgerundeter Wulst 96 anschließt. An diesen Wulst 96 schließt sich radial außen ein scheibenartig ausgebildeter Bereich 98 an, wobei der Übergang von dem Wulst 96 zum scheibenförmigen Bereich 98 im Wesentlichen geschwungen ausgebildet ist. Der scheibenförmige Bereich 98 erstreckt sich im Wesentlichen senkrecht zur Achse 80. An diesen scheibenförmigen Bereich schließt sich radial außen ein zweiter scheibenförmiger Bereich an, welcher den ersten Haltering 86 bildet, wobei die der Behälterinnenseite zugewandte Begrenzungsfläche dieser scheibenförmigen Bereiche im Wesentlichen in der gleichen Ebene liegt und wobei die der Behälteraußenseite zugewandte Begrenzungsfläche dieser scheibenförmigen Bereiche im Wesentlichen in unterschiedlichen Ebenen liegt, und zwar insbesondere derart, dass der erste Haltering 86 dicker ausgebildet ist als der scheibenförmige Bereich 98 der Verbindungswand 84.

Die dem Behältnisinneren zugewandte Begrenzungsfläche des ersten Halterings 86 sowie die ebenfalls dem Behältnisinneren zugewandte Begrenzungsfläche des scheibenförmigen Bereichs der Verbindungswand 84 zugewandte Begrenzungsfläche verläuft im Wesentlichen senkrecht zur Achse 80. Radial innen liegend schließt sich behältniszugewandt an die untere Begrenzungsfläche des ringförmigen Bereichs 98 der Verbindungswand 84 ein ringförmiger Einschnitt 100 an, dessen Bodenbereich 102 im Wesentlichen abgerundet ausgebildet ist. Die sich vom Bodenbereich 102 dieses Einschnitts 100 in Richtung der Achse 80 erstreckende Begrenzungsfläche 104 ist gewölbt ausgebildet und ist insbesondere ein Teil der der Behältnisinnenseite zugewandten Begrenzungsfläche der Membran 80.

Die aus Sicht der Achse 80 jenseits des Bodenbereichs 102 des Einschnitts 100 angeordnete Begrenzungswandung 106, welche sich von dem scheibenförmigen Bereich 98 zum Bodenbereich 102 des Einschnitts 100 erstreckt, ist ebenfalls gewölbt ausgebildet, und zwar insbesondere zumindest in Annäherung an ein Kugelsegment, dessen Krümmungsmittelpunkt behältnisabgewandt positioniert ist.

Die Verbindungswandung 84 ist insbesondere dünner ausgebildet als die Membran 82.

Der scheibenförmig ausgebildete zweite Haltering 88 schließt sich behältniszugewandt an den ersten Haltering 86 an und weist vorzugsweise einen größeren Außendurchmesser auf als der erste Haltering 86.

Das Ventil ist vorzugsweise flach ausgebildet, so dass der Außendurchmesser des Ventils mindestens doppelt, bevorzugt mindestens dreimal, besonders bevorzugt mindestens fünfmal, besonders bevorzugt mindestens siebenmal so groß ist wie die maximale Ventildicke in Richtung der Achse 80, die schematisch durch den Doppelpfeil 108 angedeutet ist.

Der Wulst 96 ist vorzugsweise gegenüber dem Bodenbereich 102 des Einschnitts 100 in radialer Richtung versetzt.

Besonders bevorzugt ist der Bodenbereich 102 des Einschnitts 100 in radialer Richtung zwischen dem Wulst 96 und der Einschnürung 94 angeordnet.

Der zweite Haltering ist vorzugsweise aus Polypropylen oder aus Polyamid hergestellt. Der verbleibende Teil des Ventils bzw. die Membran 80, die Verbindungswand 82 sowie der erste Haltering 86 und deren Übergangsbereiche sind vorzugsweise aus Silicon oder einem thermoplastischen Elastomer hergestellt.

Besonders bevorzugt ist hierbei die Materialkombination aus Silicon und Polyamid oder die Materialkombination aus einem thermoplastischen Elastomer und Polypropylen.

Diese Materialien oder Materialkombinationen sind auch für andere Ausführungsformen der Erfindung bevorzugt.

## Patentansprüche

1. Selbstschließendes Ventil (50)zur Ausgabe von fließfähigen Medien aus einem Behälter mit
einer gewölbten Membran (82), deren Wölbung in der Schließposition dem fließfähigen Medium zugewandt ist und welche sich beim Aufbau eines Drucks im Behälter in eine Ausgabeposition nach außen wölbt,
einem Halteabschnitt (86), durch welchen das Ventil an diesem Behälter gehalten wird,
einer Verbindungswand (84), welche zwischen dieser Membran (82) und diesem Halteabschnitt (86) angeordnet ist,
einer in der Membran (82) vorgesehenen Schlitzung (16), die sich in der Ausgabeposition öffnet, und
dass diese Schlitzung (16) derart angeordnet ist, dass sich bei der durch den Druck im Behälter bewirkten Verformung der Membran (82) von der Schließposition in die Ausgabeposition elastische Rückstellkräfte innerhalb dieser Membran aufbauen, welche bewirken, dass die Membran bei einer Druckentlastung aus dieser Ausgabeposition in die Schließposition zurückgeführt wird, und
die Verbindungswand (84) zwischen diesem Halteabschnitt und der Membran (82) einen ringförmigen Abschnitt aufweist, der im Wesentlichen in einer gemeinsamen Ebene mit diesem Halteabschnitt (86) oder in einer zu diesem parallelen Ebene angeordnet ist, und
dass ein Übergangsbereich (90) zwischen dieser Verbindungswand (84) und dieser Membran (82) derart gestaltet ist, dass die Membran und die Verbindungswand momentenmäßig entkoppelt sind,
dass die Membran (82) im Querschnitt eine obere und eine untere stetig gekrümmte Begrenzungswand aufweist, deren Wandstärke in diesem Bereich im wesentlichen konstant ist,
**dadurch gekennzeichnet, dass**
diese Wandstärke größer ist als die Wandstärke der Verbindungswandung (84), deren Krümmungsradius entsprechend der Membran (82) nach außen gerichtet ist.

2. Selbstschließendes Ventil gemäß Anspruch 1, **dadurch gekennzeichnet, dass** der Übergangbereich (90) zwischen Verbindungswand (84) und Membran (90) scharnierartig gestaltet ist.

3. Selbstschließendes Ventil gemäß mindestens einem der Ansprüche 1 bis 2, **dadurch gekennzeichnet, dass** die Membran und die Verbindungswand (84) im Wesentlichen rotationssymmetrisch gestaltet sind.

4. Selbstschließendes Ventil gemäß mindestens einem der Patentansprüche 1 - 3, **dadurch gekennzeichnet, dass** die Schlitzung (16) derart gestaltet ist, dass sie einen einzigen Schlitz (16') aufweist.

5. Selbstschließendes Ventil gemäß mindestens einem der Patentansprüche 1 - 3, **dadurch gekennzeichnet, dass** diese Schlitzung (16) drei Schlitze (16') aufweist, welche vorzugsweise sternförmig gestaltet sind und welche vorzugsweise im gleichen Winkelabstand zueinander angeordnet sind.

6. Selbstschließendes Ventil gemäß mindestens einem der Ansprüche 1 - 3, **dadurch gekennzeichnet, dass** diese Schlitzung vier, fünf oder mehr Schlitze (16') aufweist, die vorzugsweise sternförmig angeordnet sind und die vorzugsweise den gleichen Winkelabstand zueinander aufweisen.

7. Selbstschließendes Ventil gemäß Anspruch 4 und einem der Ansprüche 4 - 6, **dadurch gekennzeichnet, dass** diese Schlitzung (16) rotationssymmetrisch zu dieser Rotationsachse gestaltet ist.

8. Selbstschließendes Ventil gemäß mindestens einem der Ansprüche 4 - 7, **dadurch gekennzeichnet, dass** wenigstens einer dieser Schlitze (16') derart unterbrochen ist, dass eine Materialbrücke entsteht, wobei die Länge dieser Schlitzunterbrechung (19) kleiner ist, vorzugsweise wesentlich kleiner ist, als die gesamte Länge des jeweiligen Schlitzes (16).

9. Selbstschließendes Ventil gemäß mindestens einem der Ansprüche 4 - 8, **dadurch gekennzeichnet, dass** wenigstens ein Schlitz wenigstens zwei oder mehr Unterbrechungen aufweist.

10. Selbstschließendes Ventil gemäß mindestens einem der Ansprüche 1 - 9, **dadurch gekennzeichnet, dass** ein Verstärkungsring (88) vorgesehen und im Bereich des Halteabschnitts (51) angeordnet ist, welcher aus einem härteren Kunststoffmaterial gefertigt ist als das Material der Membran.

11. Selbstschließendes Ventil gemäß Anspruch 10, **dadurch gekennzeichnet, dass** dieser Verstärkungsring (88) bei rotationssymmetrischen Ventilkörper rotationssymmetrisch gestaltet ist und eine Vielzahl von Durchbrechungen aufweist, in denen sich im gefertigten Endzustand Material des Halteabschnittes (51) des Ventils befindet.

12. Selbstschließendes Ventil gemäß mindestens einem der Ansprüche 1 - 11, **dadurch gekennzeichnet, dass** der Ventilkörper aus einem Silikonmaterial besteht.

13. Selbstschließendes Ventil gemäß mindestens einem der Ansprüche 1 - 11, **dadurch gekennzeichnet, dass** der Ventilkörper aus einem thermoplastischen Elastomer besteht.

14. Selbstschließendes Ventil gemäß einem der vorangegangenen Ansprüche, **dadurch gekennzeichnet, dass** das Ventil aus thermoplastischem Elastomer und aus Polypropylen oder aus Silicon und aus Polyamid gefertigt ist.

15. Selbstschließendes Ventil gemäß einem der vorangehenden Ansprüche, **dadurch gekennzeichnet, dass** die Membran (82) hohlkugelsegmentartig geformt ist.

16. Selbstschließendes Ventil gemäß mindestens einem der vorangehenden Ansprüche, **dadurch gekennzeichnet, dass** der Ventildurchmesser im Wesentlichen mindestens doppelt so groß ist wie die Ventildicke.

## Claims

1. A self-closing valve (50) for dispensing flowable media from a container having
a curved membrane (82), the curvature of which is directed toward the flowable medium in the closed position and which bulges outwardly into a dispensing position as pressure builds up in the container,
a support portion (86) which retains the valve to said container,
a connecting wall (84) positioned between said membrane (82) and said support portion (86),
a slit arrangement (16) provided in said membrane (82) which opens in the dispensing position, and
wherein said slit arrangement (16) is configured such that as the membrane (82) deforms from the closed position to the dispensing position caused by the pressure within the container, elastic restoring forces build up within said membrane to cause said membrane to return from said dispensing position into said closed position upon release of the pressure, and
the connecting wall (84) between said support portion and the membrane (82) comprises an annular portion which is positioned substantially on a plane common with or parallel to said support portion (86), and
that a transition region (90) between said connecting wall (84) and said membrane (82) is configured such that the membrane and the connecting wall are decoupled to be moment-free,
that in cross-section, the membrane (82) comprises an upper and a lower, continuously curved boundary wall having a substantially constant thickness in said region,
**characterized in that**
said wall thickness is larger than the wall thickness of the connecting wall (84) whose radius of curvature is directed outwardly corresponding to the membrane (82).

2. The self-closing valve in accordance with claim 1, **characterized in that** the transition region (90) between the connecting wall (84) and the membrane (90) is configured to be hinged.

3. The self-closing valve in accordance with at least one of the claims 1 to 2, **characterized in that** the membrane and the connecting wall (84) are configured to be substantially rotationally symmetric.

4. The self-closing valve in accordance with at least one of the claims 1 to 3, **characterized in that** the slit arrangement (16) is configured such that it has one slit (16') only.

5. The self-closing valve in accordance with at least one of the claims 1 to 3, **characterized in that** said slit arrangement (16) comprises three slits (16') which are preferably configured to form a star and which are preferably arranged at equal angular distances from one another.

6. The self-closing valve in accordance with at least one of the claims 1 to 3, **characterized in that** said slit arrangement comprises four, five or more slits (16') which are preferably configured to form a star and which are preferably arranged at equal angular distances from one another.

7. The self-closing valve in accordance with claim 3 and one of the claims 4 to 6, **characterized in that** said slit arrangement (16) is configured to be rotationally symmetric to said axis of rotation.

8. The self-closing valve in accordance with at least one of the claims 4 to 7, **characterized in that** at least one of said slits (16') is interrupted so as to create a material bridge, wherein the length of said slit interrupts (19) is shorter, preferably substantially shorter, than the entire length of the respective slit (16).

9. The self-closing valve in accordance with at least one of the claims 4 to 8, **characterized in that** at least one slit comprises at least two or more interrupts.

10. The self-closing valve in accordance with at least one of the claims 1 to 9, **characterized in that** a reinforcing ring (88) is provided and arranged in the region of the support portion (51) which ring is made of a synthetic material harder than that of the membrane.

11. The self-closing valve in accordance with claim 10, **characterized in that** said reinforcing ring (88) is configured to be rotationally symmetric in the case of a rotationally symmetric valve body and comprises a plurality of interrupts in which material of the support portion (51) of the valve is present in the final manufacturing condition.

12. The self-closing valve in accordance with at least one of the claims 1 to 11, **characterized in that** the valve body is made of a silicone material.

13. The self-closing valve in accordance with at least one of the claims 1 to 11, **characterized in that** the valve body is made of a thermoplastic elastomer.

14. The self-closing valve in accordance with any one of the preceding claims, **characterized in that** the valve is made of a thermoplastic elastomer and of polypropylene or of silicone and of polyamide.

15. The self-closing valve in accordance with any one of the preceding claims, **characterized in that** the membrane (82) is configured to be a hollow spherical segment.

16. The self-closing valve in accordance with at least one of the preceding claims, **characterized in that** the valve is substantially at least twice as much in diameter as in thickness.

## Revendications

1. Valve (50) à fermeture automatique destinée à la distribution de produits fluides hors d'un récipient, comportant
une membrane (82) incurvée, dont la courbure est orientée vers le produit fluide dans la position de fermeture et laquelle s'incurve vers l'extérieur dans une position de distribution lors de l'application d'une pression dans le récipient,
une partie de retenue (86), par laquelle la valve est retenue sur ledit récipient,
une paroi de jonction (84) qui est agencée entre ladite membrane (82) et ladite partie de retenue (86),
un ensemble de fentes (16), qui est prévu dans la membrane (82) et qui s'ouvre dans la position de distribution, et
ledit ensemble de fentes (16) étant agencé de telle sorte que, lors de la déformation de la membrane (82) à partir de la position de fermeture vers la position de distribution, sous l'effet de la pression à l'intérieur du récipient, des forces de rappel élastiques sont générées à l'intérieur de ladite membrane (82) et font en sorte que, en cas de relâchement de la pression, la membrane (82) est ramenée hors de la position de distribution dans la position de fermeture, et
la paroi de jonction (84) comporte, entre ladite partie de retenue (86) et la membrane (82), un tronçon annulaire qui est agencé sensiblement dans un plan commun avec la partie de retenue (86) ou dans un plan parallèle à celle-ci, et
une zone de transition (90) étant conçue entre ladite paroi de jonction (84) et ladite membrane (82) de telle sorte que la membrane (82) et la paroi de jonction (84) sont découplées par moments,
la membrane (82) comportant en coupe transversale une paroi supérieure et une paroi inférieure à courbure permanente, dont l'épaisseur est sensiblement constante dans cette zone,
**caractérisée en ce que**
l'épaisseur de cette paroi est supérieure à l'épaisseur de la paroi de jonction (84), dont le rayon de courbure, conformément à la membrane (82), est orienté vers l'extérieur.

2. Valve à fermeture automatique selon la revendication 1, **caractérisée en ce que** la zone de transition (90) est conçue en forme de charnière entre la paroi de jonction (84) et la membrane (82).

3. Valve à fermeture automatique selon au moins une des revendications 1 à 2, **caractérisée en ce que** la membrane (82) et la paroi de jonction (84) sont conçues sensiblement à symétrie de révolution.

4. Valve à fermeture automatique selon au moins une des revendications 1 à 3, **caractérisée en ce que** l'ensemble de fentes (16) est réalisé de telle sorte qu'il comporte une seule fente (16').

5. Valve à fermeture automatique selon au moins une des revendications 1 à 3, **caractérisée en ce que** ledit ensemble de fentes (16) comporte trois fentes (16'), qui sont configurées de préférence en forme d'étoile et qui sont agencées de préférence avec le même écart angulaire entre elles.

6. Valve à fermeture automatique selon au moins une des revendications 1 à 3, **caractérisée en ce que** ledit ensemble de fentes (16) comporte quatre, cinq ou plus de fentes (16'), qui sont configurées de préférence en forme d'étoile et qui sont agencées de préférence avec le même écart angulaire entre elles.

7. Valve à fermeture automatique selon la revendication 3 et selon l'une des revendications 4 à 6, **caractérisée en ce que** ledit ensemble de fentes (16) est configuré à symétrie de révolution par rapport à cet axe de rotation.

8. Valve à fermeture automatique selon au moins une des revendications 4 à 7, **caractérisée en ce qu'**au moins une des fentes (16') est interrompue de manière à former un pont de matière, la longueur de cette interruption de fente (19) étant inférieure, de préférence nettement inférieure, à la longueur totale de la fente (16) concernée.

9. Valve à fermeture automatique selon au moins une des revendications 4 à 8, **caractérisée en ce qu'**au moins une fente comporte au moins deux ou plus d'interruptions.

10. Valve à fermeture automatique selon au moins une des revendications 1 à 9, **caractérisée en ce qu'**il est prévu une bague de renfort (88), qui est agencée dans la zone de la partie de retenue (51) et qui est réalisée dans une matière plastique plus dure que la matière de la membrane.

11. Valve à fermeture automatique selon la revendication 10, **caractérisée en ce que**, en présence de corps de valve à symétrie de révolution, ladite bague de renfort (88) est réalisée avec une symétrie de révolution et comporte une pluralité de trous débouchants qui, à l'état fini, contiennent la matière de la partie de retenue (51) de la valve.

12. Valve à fermeture automatique selon au moins une des revendications 1 à 11, **caractérisée en ce que** le corps de valve est réalisé dans une matière silicone.

13. Valve à fermeture automatique selon au moins une des revendications 1 à 11, **caractérisée en ce que** le corps de valve est réalisé dans un élastomère thermoplastique.

14. Valve à fermeture automatique selon l'une quelconque des revendications précédentes, **caractérisée en ce que** la valve est réalisée dans un élastomère thermoplastique et en polypropylène ou en silicone et en polyamide.

15. Valve à fermeture automatique selon l'une quelconque des revendications précédentes, **caractérisée en ce que** la membrane (82) est conçue en forme de segment sphérique creux.

16. Valve à fermeture automatique selon au moins une des revendications précédentes, **caractérisée en ce que** le diamètre de la valve est au moins sensiblement égal au double de l'épaisseur de la valve.
